# EUROPEAN PATENT SPECIFICATION

(11) **EP 4 098 392 B1**
(45) Date of publication and mention of the grant of the patent: **02.12.2026**
(21) Application number: 21190239.0
(22) Date of filing: 09.08.2021
(51) Int. Cl.: B23K 31/00, B23K 26/21, B23K 26/26, B23K 101/00, H01M 50/169

(54) **WELDING METHOD OF BATTERY COVER PLATE**
SCHWEISSVERFAHREN EINER BATTERIEABDECKPLATTE
PROCÉDÉ DE SOUDAGE DE PLAQUE DE COUVERCLE DE BATTERIE

(30) Priority: 04.06.2021 CN 202110623708
(43) Date of publication of application: 07.12.2022
(73) Proprietor: CALB Co., Ltd., Changzhou City, Jiangsu Province (CN); CALB Technology Co., Ltd., Changzhou City, Jiangsu Province (CN)
(72) Inventor: FAN, Yanliang, Changzhou City (CN); ZENG, Tianxing, Changzhou City (CN); SONG, Ruxin, Changzhou City (CN)
(74) Representative: Becker, Eberhard

(56) References cited:
- WO-A1-2007/071121
- CN-A- 111 451 632
- US-A1- 2013 136 979

## Description

### BACKGROUND

### Technical Field

The disclosure relates to a technical field of battery production and manufacturing, and in particular, relates to a welding method of a battery cover plate.

### Description of Related Art

In the conventional welding process of a battery cover plate and a battery shell, since welding and formation are achieved through single welding, excessive energy is accumulated. The middle position of the shell (especially the larger surfaces) is far away from the supporting structures at both ends, so it is more likely to deform when being heated. Moreover, some batteries have smaller indentations on one side and larger indentations on the other side. The welding laser beam for sealing is prone to light leakage and may hit through the cell.

As described above, indentations on the battery shell may lead to the following problems. Indentations on the shell may lead to a decrease in the internal space of the battery, the injection time is prolonged, and the injected electrolyte may produce spray. After the battery is provided with a constant capacity, the electrode sheet may swell and cause the cell to swell. Since the positions of the indentations on the shell may abut against the surface of the cell, lithium precipitation may occur. The indentations on the shell may also increase the difficulty of sorting and attaching of blue films, and bubbles and folds may be easily generated as a result. Further, the battery module needs to be coated with more structural glue to fill the indentations, the efficiency of module formation may simultaneously be affected, and the appearance and quality may also be influenced.

Document US 2013/136979 A1 (forming the basis for the preamble of claim 1) provides a component of an implantable medical device including a first member, a second member, and a composite seam weld formed between the first member and the second member. In some examples, the composite seam weld includes a continuous wave (CW)-welded portion formed using CW welding and a pulse-welded portion formed using pulsed welding. A first end of the pulse-welded portion may partially overlap a first end of the CW-welded portion and may be offset from the first end of the CW-welded portion in a direction substantially perpendicular to a longitudinal orientation of the first end of the CW-welded portion. Techniques for forming composite seam welds are also described.

### SUMMARY

The invention is set out in the appended set of claims. The following disclosure serves a better understanding of the present invention. The disclosure provides a welding method of a battery cover plate.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view illustrating a weld track in a welding method of a battery cover plate.
FIG. 2 is a schematic view illustrating positions of continuous welding on a cover plate and a shell in the welding method of the battery cover plate shown in FIG. 1.
FIG. 3 is a schematic view illustrating a weld track of a welding method of a battery cover plate according to the present invention.
FIG. 4 is a schematic view illustrating a weld track of a welding method of a battery cover plate according to another exemplary embodiment of the disclosure.

### DESCRIPTION OF THE EMBODIMENTS

The technical solutions in the exemplary embodiments of the disclosure will be described clearly and explicitly in conjunction with the drawings. The description proposed herein is just for the purpose of illustrations only, not intended to limit the scope of the disclosure, so it should be understood that and various modifications and variations could be made thereto without departing from the scope of the appended claims.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

Example One

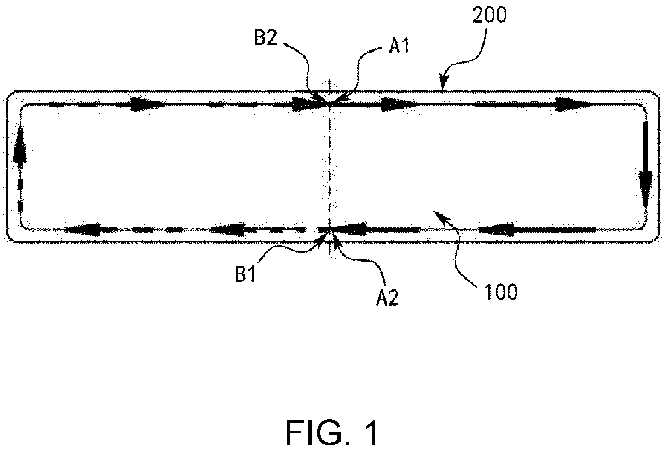

With reference to FIG. 1 which illustrates a schematic view of a weld track in a welding method of a battery cover plate. The welding method of the battery cover plate is thereby described by treating the welding of a shell 200 and a cover plate 100 applied to a vehicle battery as an example.

As shown in FIG. 1, the welding method of the battery cover plate provided includes performing two times of welding along a connecting seam between the shell 200 and the cover plate 100. A weld track of each welding is a portion of the connecting seam, and the overall weld track of the two times of welding covers a periphery of the connecting seam. Specifically, first welding is performed, and the first welding starts from an edge of one side of the cover plate 100, continuously welds a portion of the connecting seam between the shell 200 and the cover plate 100, and ends at an edge of an opposite side of the cover plate 100. Second welding is performed, and the second welding starts from an ending position of the first welding, continuously welds a remaining portion of the connecting seam, and ends at an initial position of the first welding, or, the second welding starts from the initial position of the first welding, continuously welds the remaining portion of the connecting seam, and ends at the ending position of the first welding. Through the foregoing design, the welding method of the battery cover plate may facilitate heat dissipation of the battery shell. As overall heat produced in a welding process is low, deformation may not easily occur, and the problem of indentations may also be alleviated. A decrease in indentations may reach as much as 40% to 50%, and a product yield of the welding process may thus be significantly improved.

Optionally, as shown in FIG. 1, the welding method of the battery cover plate including two times of welding is taken as an example. The welding method may include the following steps. Performing the first welding, wherein the first welding starts from the edge of one side of the cover plate 100, continuously welds a portion of the connecting seam, and ends at the edge of the opposite side of the cover plate. Performing the second welding, wherein the second welding starts from the ending position of the first welding, continuously welds the remaining portion of the connecting seam, and ends at the initial position of the first welding. In the disclosure, a substantially U-shaped weld track may be formed through one time of welding, and welding of half of the battery is completed at a time, so high welding efficiency is provided. In addition, the welding method including two times of welding is taken as an example herein, and the two times of welding may respectively start from a middle portion of the edge of the battery cover plate to facilitate heat dissipation and to further prevent indentations from occurring.

Herein, as shown in FIG. 1, an ending position B2 of the second welding may substantially overlap an initial position A1 of the first welding, and an initial position B1 of the second welding may substantially overlap an ending position A2 of the first welding. Based on the above, from the top view of the cover plate 100, when the first welding moves clockwise around the connecting seam, the second welding also moves clockwise around the connecting seam. In other examples, when the first welding moves counterclockwise around the connecting seam, the second welding also moves counterclockwise around the connecting seam.

Optionally, in this example, a pause is provided after the first welding ends and before the second welding starts. Accordingly, before the other half of the battery is welded, heat dissipation may be performed during the pause, and deformation of the shell may thus be further reduced.

Optionally, in this example, a track of the connecting seam between the shell 200 and the cover plate 100 is substantially rectangular, and the rectangular track has two opposite longer sides. The two longer sides correspond to larger surfaces of the two sides of the shell 200. Based on the above, the initial position of each welding corresponds to one of the longer sides, and the ending position of each welding corresponds to the other one of the longer sides. In other words, in each welding process, the welding may start from one of the longer sides of the rectangular track of the connecting seam and ends at the other one of the longer sides. That is, each welding starts from a position of the connecting seam corresponding to the larger surface of one side of the shell 200 and ends at a position of the connecting seam corresponding to the larger surface of the other side of the shell 200.

Further, in this example, the rectangular track of the connecting seam has two longer sides opposite to each other, so that the initial position of each welding may correspond to a midpoint position of one of the longer sides, and the ending position of each welding may correspond to a midpoint position of the other one of the longer sides. In other words, in each welding, a welding beam may move along approximately half the periphery of the track of the connecting seam between the cover plate 100 and the shell 200, and may move from one larger surface of one side to the larger surface of the other side. Through the foregoing design, the welding of the larger surfaces of the battery shell 200 and the cover plate 100 may be divided into two times of equivalent welding. The heat generated by each welding is thus lowered, the battery shell 200 may be effectively reduced, especially the indentations on the larger surfaces of the shell 200.

Optionally, in the welding process, positioning of the battery through a fixture is taken as an example herein, and a process design in which the second welding starts from the initial position of the first welding is applied. In this example, the welding method of the battery cover plate provided by the disclosure may further include the following steps. After the first welding ends, releasing positioning performed by the fixture, positioning the battery to the fixture again after horizontally rotating the battery by 180°, and then performing the second welding. A position of a welding device is substantially stationary in the process. Through the foregoing process design, the shells on both sides of the battery may be made symmetrical, and a welding head of the welding device does not need to be moved to a great extent. Moreover, from the beginning of the first welding, the initial position of the first welding is cooled down for a certain period of time, such that stopping time for cooling may be shortened, and the shell may be further reduced, especially the indentations on the larger surfaces of the shell. The foregoing welding method may be conveniently performed. In other examples, when the second welding starts from the initial position of the first welding, after the first welding ends, the battery may also be kept unmoved, the welding device may be moved to the initial position of the second welding, and the second welding is then performed.

In addition, in the process design, as the pause is provided between the two times of welding and the battery is horizontally rotated by 180° after the first welding ends, in this example, the pause may be greater than or equal to the time required for "releasing positioning performed by the fixture → horizontally rotating the battery by 180 ° → performing positioning again by the fixture". That is, the operation of battery rotation by 180° may be performed during the pause. In other words, the operation of rotating the battery by 180° is equivalent to providing the pause between the two times of welding.

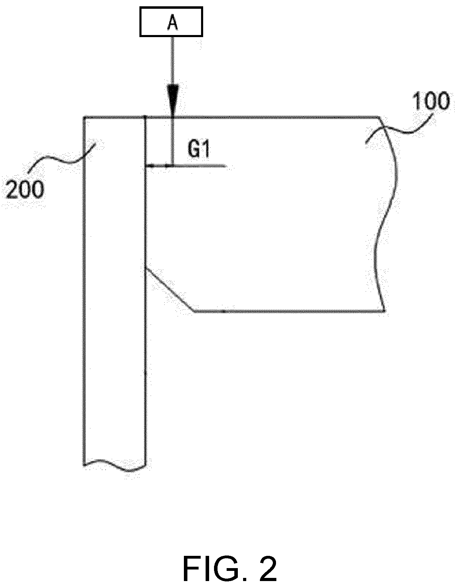

Optionally, as shown in FIG. 2, during each welding, when continuous welding is performed to the connecting seam, the welding beam (e.g., a laser source) may be aligned with a position A on the edge of the cover plate 100, and a gap G1 is defined between the position A and the connecting seam. Based on the above, the gap G1 may be less than 0.5mm, such as 0.1mm, 0.2mm, 0.3mm, 0.4mm, etc. Since higher-power of welding is required to satisfy the strength required for formation of the weld seam, the cover plate 100 having larger thickness may not be easily welded through, or the cover plate 100 may withstand greater welding power than the shell 200. Therefore, the weld track is arranged on the position A of the cover plate 100, wherein the gap G1 is defined between the position A and the connecting seam, and in this way, the battery is prevented from being welded through and damaged. Safety of the welding is thereby improved, and a welding yield of the battery is effectively increased. In other examples, the gap G1 may also be less than 0.1mm or may be greater than or equal to 0.5mm, such as 0.08mm, 0.6mm, etc..

### Embodiment Two

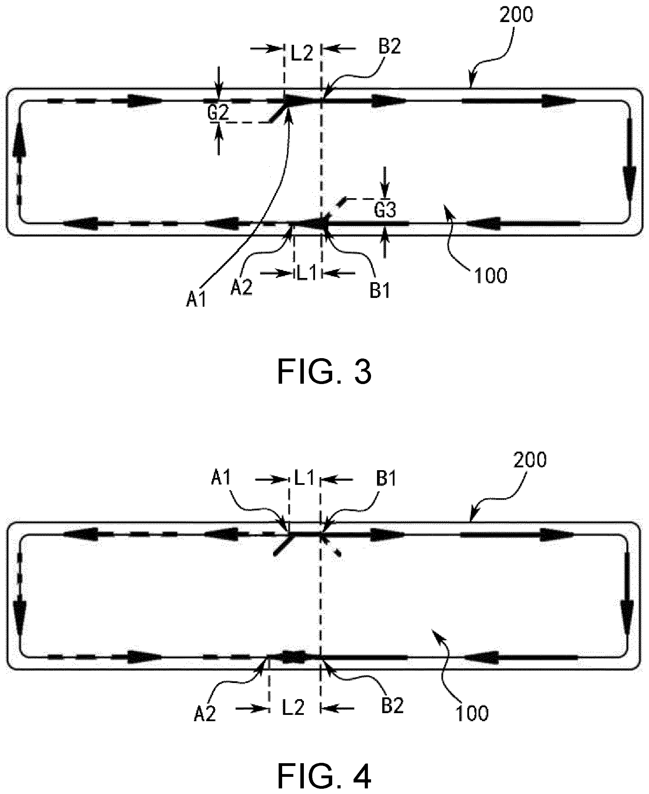

Based on the detailed description of the welding method of the battery cover plate of example one, description of the welding method of the battery cover plate of embodiment two provided by the disclosure is stated as follows. With reference to FIG. 3 which illustrates a schematic view of a weld track in embodiment two in a welding method of a battery cover plate provided by the disclosure. Hereinafter, the design of the welding method in embodiment two that is different from the design of example one is to be described in combination with FIG. 3.

As shown in FIG. 3, in this embodiment, before each welding starts, the welding beam may move from a position of the cover plate 100 adjacent to the edge towards the edge of the cover plate 100 to achieve a laser molten metal pool, and may continuously move along the connecting seam after reaching the edge of the cover plate 100. To be specific, in FIG. 3, the laser molten metal pool before the initial position A1 of the first welding and the ending position A2 of the continuous welding are shown, and the laser molten metal pool before the initial position B1 of the second welding and the ending position B2 of the continuous welding are also shown. When continuous welding is performed, on the basis that the gap is provided between the alignment position of the welding beam on the cover plate 100 and the connecting seam, before the first welding starts, a moving distance G2 of the welding beam from the position of the cover plate 100 adjacent to the edge towards the edge of the cover plate 100 is greater than the gap G1 between the alignment position of the welding beam on the cover plate 100 and the connecting seam when continuous welding is performed. Before the second welding starts, a moving distance G3 of the welding beam from the position of the cover plate 100 adjacent to the edge towards the edge of the cover plate 100 is greater than the gap G1 between the alignment position of the welding beam on the cover plate 100 and the connecting seam when continuous welding is performed. Through the foregoing process design, light leakage may be prevented from occurring in the battery through the welding method provided by the disclosure, and a cell may also be prevented from being damaged by laser. Stiffness of the weld seam formed on the edge may thus be accordingly enhanced. In the above welding process, the molten metal pool is similar to water flow and moves forwards along a welding path. Besides, based on the foregoing design, an approximately "L"-shaped molten metal pool adjacent to the initial position may be formed when the welding starts. In this way, light leakage may be effectively reduced, the safety of the battery may be improved, and a process yield may be further increased. A maximum gap of light leakage may be increased from 0.1mm provided by the related art to 0.2mm.

Further, as shown in FIG. 3, based on the process design that the welding beam moves towards the edge of the cover plate 100 from the position on the cover plate 100 adjacent to the edge before the first welding starts, in this embodiment, the moving distance G2 is less than 0.8mm, such as 0.5mm, 0.6mm, 0.7mm, etc., and the gap G1 is less than 0.5mm.

Further, as shown in FIG. 3, based on the process design in which the welding beam moves towards the edge of the cover plate 100 from the position on the cover plate 100 adjacent to the edge before the second welding starts, in this embodiment, the moving distance G3 is less than 0.8mm, such as 0.5mm, 0.6mm, 0.7mm, etc., and the gap G1 is less than 0.5mm. Besides, before the two times of welding start, the moving distances G2 and G3 of the welding beam from the position on the cover plate 100 adjacent to the edge towards the edge of the cover plate 100 may be but not limited to equal.

Optionally, as shown in FIG. 3, in this embodiment, during each welding, welding power accelerates to rated power when the welding beam starts to move from the initial position. A portion of the connecting seam corresponding to movement of the welding beam when the welding power accelerates forms a low-power welding zone. To be specific, the connecting seam forms a low-power welding zone L1 corresponding to an acceleration process of the welding power of the first welding, and the connecting seam forms a low-power welding zone L2 corresponding to an acceleration process of the welding power of the second welding.

Optionally, as shown in FIG. 3, in this embodiment, when each welding is performed, the welding beam decelerates from the rated power before moving towards the ending position, and the portion of the connecting seam corresponding to movement of the welding beam when the welding power decelerates forms the low-power welding zone.

Further, as shown in FIG. 3, when each welding starts and before each welding ends, the corresponding portion on the connecting seam forms the low-power welding zones. Based on the foregoing process design, in this embodiment, the low-power welding zone formed when the initial welding power accelerates during the second welding may overlap the low-power welding zone formed when the welding power decelerates before the first welding ends. Moreover, the low-power welding zone formed when the welding power decelerates before ending during the second welding overlaps the low-power welding zone formed when the initial welding power accelerates during the first welding. Besides, a length of the low-power welding zone formed when the initial welding power accelerates may be equal to a length of the low-power welding zone formed when the welding power decelerates before ending. In this way, weld strength of the low-power welding zones may be improved. Based on the above, as shown in FIG. 3, the low-power welding zone formed when the welding power decelerates during the first welding actually overlaps the low-power welding zone L2, and the low-power welding zone formed when the welding power decelerates during the second welding actually overlaps the low-power welding zone L1.

It should be noted that, in other embodiments, for any time of welding, only when such welding starts does the welding power begin to accelerate, or only before such welding ends does the welding power begin to decelerate, and implementation thereof may be flexibly adjusted according to types of welding equipment and welding parameters.

Further, as shown in FIG. 3, based on the process design in which the welding power is configured to accelerate when the welding starts, in this embodiment, the second welding may start from a position before the ending position of the first welding. In this way, the low-power welding zone formed when the welding power accelerates during the second welding overlaps a portion of the weld track of the first welding adjacent to the ending position, and a portion of the weld track of the second welding adjacent to the ending position overlaps the low-power welding zone of the first welding. In other embodiments, during the second welding, starting from the initial position of the first welding and ending at the ending position of the first welding, the low-power welding zone formed when the second welding starts overlaps the low-power welding zone formed when the first welding starts.

Further, as shown in FIG. 3, based on the process design that the welding power decelerates before the welding ends, in this embodiment, each welding may start from a position before the ending position of the previous welding. In this way, a portion of the weld track adjacent to the initial position overlaps the low-power welding zone formed when the welding power decelerates during the previous welding, and the low-power welding zone of the last welding overlaps a portion of the weld track of the first welding adjacent to the initial position. In other embodiments, during the second welding, starting from the initial position of the first welding and ending at the ending position of the first welding, the low-power welding zone formed when the second welding ends overlaps the low-power welding zone formed when the first welding ends. Through the foregoing process design, the low-power welding zone is a zone where the laser may pass through during both times of welding, and laser irradiation power received by this zone is smaller, so that the stiffness of the weld seam may be ensured through overlapping of the irradiation. Further, the shell of the battery is required to be sealed, if he two times of welding in the low-power welding zone are hit at the same position with the rated power (higher power), it is easy to cause battery breakdown. Therefore, the foregoing process design provided by the disclosure ensures both the stiffness of the weld seam and the sealing property of the battery.

Further, as shown in FIG. 3, the length of the low-power welding zone L1 formed when the welding power accelerates after the first welding starts may be 3mm to 6mm, such as 3mm, 4mm, 5mm, 6mm, etc. In other embodiments, the length of the low-power welding zone L1 may also be less than 3mm or may be greater than 6mm, such as 2mm, 7mm, etc., which is not limited to the embodiment.

Further, as shown in FIG. 3, the length of the low-power welding zone L2 formed when the welding power accelerates after the second welding starts may be 3mm to 6mm, such as 3mm, 4mm, 5mm, 6mm, etc. In other embodiments, the length of the low-power welding zone L2 may also be less than 3mm or may be greater than 6mm, such as 2mm, 7mm, etc., which is not limited to the embodiment.

As described above, the length of the low-power welding zone formed when the welding power decelerates before the first welding ends and the length of the low-power welding zone formed when the welding power decelerates before the second welding ends may be found with reference to length ranges of the low-power welding zone L2 and the low-power welding zone L1 respectively, description thereof is thus not repeated herein.

### Embodiment Three

Based on the detailed description of the welding method of the battery cover plate of example one and embodiment two provided by the disclosure, description of the welding method of the battery cover plate of embodiment three provided by the disclosure is stated as follows. With reference to FIG. 4 which illustrates a schematic view of a weld track in embodiment three in a welding method of a battery cover plate provided by the disclosure. Hereinafter, the design of the welding method in embodiment three that is different from the design of example one and embodiment two is to be described in combination with FIG. 4.

As shown in FIG. 4, the welding method of the battery cover plate including two times of welding is taken as an example in this embodiment. The welding method may include the following steps. Performing the first welding, wherein the first welding starts from the edge of one side of the cover plate 100, continuously welds a portion of the connecting seam, and ends at the edge of the opposite side of the cover plate 100. Performing the second welding, wherein the second welding starts from the initial position (or an adjacent region) of the first welding, continuously welds the remaining portion of the connecting seam, and ends at the ending position (or an adjacent region) of the first welding.

Herein, as shown in FIG. 4, the initial position B1 of the second welding may substantially be adjacent to the initial position A1 of the first welding, and the ending position B2 of the second welding may substantially be adjacent to the ending position A2 of the first welding. Based on the above, from the top view of the cover plate 100, when the first welding moves clockwise around the connecting seam, the second welding moves counterclockwise around the connecting seam. In other embodiments, when the first welding moves counterclockwise around the connecting seam, the second welding moves clockwise around the connecting seam.

It is noted that, the welding method of the battery cover plate shown in the drawings and described in the specification are only a few examples of many types of the welding methods that may implement the principles of the disclosure. It should be clearly understood that the principles of the disclosure are by no means limited to any details or any steps of the welding method of the battery cover plate shown in the drawings or described in the specification, but by the content of the appended claims.

In view of the foregoing, in the welding method of the battery cover plate provided by the disclosure, welding of the connecting seam between the battery shell and the cover plate is divided into two times of welding. During each welding, welding is performed from one side of the connecting seam towards the opposite side, and welding of the entire periphery of the connecting seam is ultimately achieved. Through the foregoing design, the welding method of the battery cover plate provided by the disclosure may facilitate heat dissipation of the battery shell. As overall heat produced in the welding process is low, deformation may not easily occur, the problem of indentations may be alleviated, and the product yield of the welding process may also be significantly improved.

## Claims

1. A welding method of a battery cover plate, comprising:
performing a first continuous welding, wherein the first continuous welding starts from an edge of a side of a cover plate (100), continuously welds a portion of a connecting seam between a shell (200) and the cover plate (100), and ends at an edge of an opposite side of the cover plate (100); and
performing a second continuous welding, wherein the second continuous welding starts from an ending position (A2) of the first continuous welding, continuously welds a remaining portion of the connecting seam, and ends at an initial position (A1) of the first continuous welding, or, the second continuous welding starts from the initial position (A1) of the first continuous welding, continuously welds the remaining portion of the connecting seam, and ends at the ending position (A2) of the first continuous welding,
wherein a track of the connecting seam between the shell (200) and the cover plate (100) is rectangular, the rectangular track has two opposite longer sides, the initial position of each welding corresponds to one of the longer sides, and the ending position of each welding corresponds to the other one of the longer sides, and
the welding method is **characterized in that**
the initial position of each welding corresponds to a midpoint position of one of the longer sides, and the ending position of each welding corresponds to a midpoint position of the other one of the longer sides,
wherein before each welding starts, a welding beam moves from a position of the cover plate (100) adjacent to the edge towards the edge of the cover plate (100) to achieve a laser molten metal pool, and continuously moves along the connecting seam after reaching the edge of the cover plate (100), wherein a moving distance (G2, G3) of the welding beam from the position of the cover plate (100) adjacent to the edge towards the edge of the cover plate (100) is less than 0.8mm,
wherein during the continuous welding, a welding beam is aligned with a position (A) on the edge of the cover plate (100), a gap (G1) is defined between the position (A) and the connecting seam, and the gap (G1) is less than 0.5mm, and
wherein, before the first continuous welding starts, the moving distance (G2) is greater than the gap (G1), and before the second continuous welding starts, the moving distance (G3) is greater than the gap (G1).

2. The welding method of the battery cover plate according to claim 1, wherein a pause is provided after the first continuous welding ends and before the second continuous welding starts.

3. The welding method of the battery cover plate according to claim 1 or 2, wherein a battery is positioned through a fixture, the second continuous welding starts from the initial position (A1) of the first continuous welding, and the welding method further comprises the following steps:
after the first continuous welding ends, releasing positioning performed by the fixture, positioning the battery to the fixture again after horizontally rotating the battery by 180°, and performing the second continuous welding, or
after the first continuous welding ends, keeping the battery unmoved, moving a welding device to an initial position (B1) of the second continuous welding, and performing the second continuous welding.

4. The welding method of the battery cover plate according to claim 1 or 2, wherein during each welding, welding power accelerates to rated power when the welding beam starts to move from the initial position (A1, B1), a portion of the connecting seam corresponding to movement of the welding beam when the welding power accelerates forms a low-power welding zone (L1, L2); during each welding, the welding beam is decelerated from the rated power before moving towards the ending position (A2, B2), and a portion of the connecting seam corresponding to movement of the welding beam when the welding power decelerates forms a low-power welding zone (L1, L2).

5. The welding method of the battery cover plate according to claim 4, wherein the low-power welding zone formed when the second continuous welding starts overlaps the low-power welding zone formed when the first continuous welding ends, and the low-power welding zone formed when the second continuous welding ends overlaps the low-power welding zone formed when the first continuous welding starts, or;
the low-power welding zone formed when the second continuous welding starts overlaps the low-power welding zone formed when the first continuous welding starts, and the low-power welding zone formed when the second continuous welding ends overlaps the low-power welding zone formed when the first continuous welding ends.

6. The welding method of the battery cover plate according to claim 5, wherein a length of the low-power welding zone (L1, L2) formed when the welding power accelerates is equal to a length of the low-power welding zone (L1, L2) formed when the welding power decelerates.

## Patentansprüche

1. Schweißverfahren einer Batterieabdeckplatte, umfassend:
Durchführen eines ersten kontinuierlichen Schweißvorgangs, wobei der erste kontinuierliche Schweißvorgang an einer Kante einer Seite einer Abdeckplatte (100) beginnt, einen Abschnitt einer Verbindungsnaht zwischen einem Gehäuse (200) und der Abdeckplatte (100) kontinuierlich verschweißt und an einer Kante einer gegenüberliegenden Seite der Abdeckplatte (100) endet; und
Durchführen eines zweiten kontinuierlichen Schweißvorgangs, wobei der zweite kontinuierliche Schweißvorgang an einer Endposition (A2) des ersten kontinuierlichen Schweißvorgangs beginnt, einen verbleibenden Abschnitt der Verbindungsnaht kontinuierlich verschweißt und an einer Startposition (A1) des ersten kontinuierlichen Schweißvorgangs endet, oder der zweite kontinuierliche Schweißvorgang an der Startposition (A1) des ersten kontinuierlichen Schweißvorgangs beginnt, den verbleibenden Abschnitt der Verbindungsnaht kontinuierlich verschweißt und an der Endposition (A2) des ersten kontinuierlichen Schweißvorgangs endet,
wobei ein Verlauf der Verbindungsnaht zwischen dem Gehäuse (200) und der Abdeckplatte (100) rechteckig ist, der rechteckige Verlauf zwei gegenüberliegende Längsseiten aufweist, die Startposition jedes Schweißvorgangs einer der Längsseiten entspricht und die Endposition jedes Schweißvorgangs der anderen der Längsseiten entspricht, und
das Schweißverfahren **dadurch gekennzeichnet ist, dass**
die Startposition jedes Schweißvorgangs einem Mittelpunkt einer der Längsseiten entspricht und die Endposition jedes Schweißvorgangs einem Mittelpunkt der anderen der Längsseiten entspricht,
wobei sich vor Beginn jedes Schweißvorgangs ein Schweißstrahl von einer Position der Abdeckplatte (100) in Randnähe in Richtung des Randes der Abdeckplatte (100) bewegt, um ein Laserschmelzbad zu erzeugen, und sich nach Erreichen des Randes der Abdeckplatte (100) kontinuierlich entlang der Verbindungsnaht bewegt, wobei eine Bewegungsstrecke (G2, G3) des Schweißstrahls von der randnahen Position der Abdeckplatte (100) in Richtung des Randes der Abdeckplatte (100) weniger als 0,8 mm beträgt,
wobei während des kontinuierlichen Schweißvorgangs ein Schweißstrahl auf eine Position (A) an dem Rand der Abdeckplatte (100) ausgerichtet wird, zwischen der Position (A) und der Verbindungsnaht ein Spalt (G1) definiert ist und der Spalt (G1) kleiner als 0,5 mm ist, und
wobei vor Beginn des ersten kontinuierlichen Schweißvorgangs die Bewegungsstrecke (G2) größer ist als der Spalt (G1) und vor Beginn des zweiten kontinuierlichen Schweißvorgangs die Bewegungsstrecke (G3) größer ist als der Spalt (G1).

2. Schweißverfahren der Batterieabdeckplatte nach Anspruch 1, wobei nach Beendigung des ersten kontinuierlichen Schweißvorgangs und vor Beginn des zweiten kontinuierlichen Schweißvorgangs eine Pause vorgesehen ist.

3. Schweißverfahren der Batterieabdeckplatte nach Anspruch 1 oder 2, wobei eine Batterie mittels einer Haltevorrichtung positioniert wird, der zweite kontinuierliche Schweißvorgang an der Startposition (A1) des ersten kontinuierlichen Schweißvorgangs beginnt und das Schweißverfahren ferner die folgenden Schritte umfasst:
nach Beendigung des ersten kontinuierlichen Schweißvorgangs die durch die Haltevorrichtung bewirkte Positionierung aufheben, die Batterie nach einer horizontalen Drehung um 180° erneut in der Haltevorrichtung positionieren und den zweiten kontinuierlichen Schweißvorgang durchführen, oder
nach Beendigung des ersten kontinuierlichen Schweißvorgangs die Batterie unbewegt lassen, eine Schweißvorrichtung in eine Startposition (B1) des zweiten kontinuierlichen Schweißvorgangs bewegen und den zweiten kontinuierlichen Schweißvorgang durchführen.

4. Schweißverfahren der Batterieabdeckplatte nach Anspruch 1 oder 2, wobei während jedes Schweißvorgangs die Schweißleistung auf die Nennleistung ansteigt, wenn sich der Schweißstrahl von der Startposition (A1, B1) aus zu bewegen beginnt, wobei ein Abschnitt der Verbindungsnaht der Bewegung des Schweißstrahls bei ansteigender Schweißleistung entspricht, eine Schweißzone mit geringer Leistung (L1, L2) bildet; wobei während jedes Schweißvorgangs der Schweißstrahl vor der Bewegung in Richtung der Endposition (A2, B2) von der Nennleistung aus abgebremst wird und ein Abschnitt der Verbindungsnaht, der der Bewegung des Schweißstrahls bei abnehmender Schweißleistung entspricht, eine Schweißzone mit geringer Leistung (L1, L2) bildet.

5. Schweißverfahren der Batterieabdeckplatte nach Anspruch 4, die zu Beginn des zweiten kontinuierlichen Schweißvorgangs gebildete Schweißzone mit geringer Leistung die am Ende des ersten kontinuierlichen Schweißvorgangs gebildete Schweißzone mit geringer Leistung überlappt und die am Ende des zweiten kontinuierlichen Schweißvorgangs gebildete Schweißzone mit geringer Leistung die zu Beginn des ersten kontinuierlichen Schweißvorgangs gebildete Schweißzone mit geringer Leistung überlappt, oder;
die zu Beginn des zweiten kontinuierlichen Schweißvorgangs gebildete Schweißzone mit geringer Leistung die zu Beginn des ersten kontinuierlichen Schweißvorgangs gebildete Schweißzone mit geringer Leistung überlappt und die am Ende des zweiten kontinuierlichen Schweißvorgangs gebildete Schweißzone mit geringer Leistung die am Ende des ersten kontinuierlichen Schweißvorgangs gebildete Schweißzone mit geringer Leistung überlappt.

6. Schweißverfahren der Batterieabdeckplatte nach Anspruch 5, wobei eine Länge der Schweißzone mit geringer Leistung (L1, L2), die bei ansteigender Schweißleistung gebildet wird, gleich einer Länge der Schweißzone mit geringer Leistung (L1, L2) ist, die bei abnehmender Schweißleistung gebildet wird.

## Revendications

1. Procédé de soudage d'une plaque de couvercle de batterie, comprenant :
la réalisation d'un premier soudage continu, dans lequel le premier soudage continu commence à partir d'un bord d'un côté d'une plaque de couvercle (100), soude en continu une partie d'un cordon de soudure reliant une coque (200) et la plaque de couvercle (100), et se termine à un bord d'un côté opposé de la plaque de couvercle (100) ; et
la réalisation d'un deuxième soudage continu, dans lequel le deuxième soudage continu commence à partir d'une position finale (A2) du premier soudage continu, soude en continu une partie restante du cordon de soudure, et se termine à une position initiale (A1) du premier soudage continu, ou bien le deuxième soudage continu commence à partir de la position initiale (A1) du premier soudage continu, soude en continu la partie restante du cordon de soudure, et se termine à la position finale (A2) du premier soudage continu,
dans lequel un tracé du cordon de soudure entre la coque (200) et la plaque de couvercle (100) est rectangulaire, ce tracé rectangulaire comporte deux côtés longs opposés, la position initiale de chaque soudage correspond à l'un des côtés longs, et la position finale de chaque soudage correspond à l'autre des côtés longs, et
le procédé de soudage est **caractérisé en ce que**
la position initiale de chaque soudage correspond au point médian de l'un des côtés longs, et la position finale de chaque soudage correspond au point médian de l'autre des côtés longs,
dans lequel, avant le début de chaque soudage, un faisceau de soudage se déplace depuis une position de la plaque de couvercle (100) adjacente au bord vers le bord de la plaque de couvercle (100) afin de former un bain de fusion au laser, puis se déplace en continu le long du cordon de soudure après avoir atteint le bord de la plaque de couvercle (100), la distance de déplacement (G2, G3) du faisceau de soudage, depuis la position de la plaque de couvercle (100) adjacente au bord jusqu'au bord de la plaque de couvercle (100), étant inférieure à 0,8 mm,
dans lequel, pendant le soudage continu, un faisceau de soudage est aligné avec une position (A) sur le bord de la plaque de couvercle (100), un écart (G1) est défini entre la position (A) et le cordon de soudure, et cet écart (G1) est inférieur à 0,5 mm, et
dans lequel, avant le début du premier soudage continu, la distance de déplacement (G2) est supérieure à l'écart (G1), et avant le début du deuxième soudage continu, la distance de déplacement (G3) est supérieure à l'écart (G1).

2. Procédé de soudage de la plaque de couvercle de batterie selon la revendication 1, dans lequel une pause est prévue après la fin du premier soudage continu et avant le début du deuxième soudage continu.

3. Procédé de soudage de la plaque de couvercle de batterie selon la revendication 1 ou 2, dans lequel une batterie est positionnée à l'aide d'un dispositif de fixation, le deuxième soudage continu commence à partir de la position initiale (A1) du premier soudage continu, et le procédé de soudage comprend en outre les étapes suivantes :
une fois le premier soudage continu terminé, relâcher le positionnement assuré par le dispositif de fixation, repositionner la batterie dans le dispositif de fixation après avoir fait pivoter horizontalement la batterie de 180°, puis effectuer le deuxième soudage continu, ou une fois le premier soudage continu terminé, maintenir la batterie immobile, déplacer un dispositif de soudage vers une position initiale (B1) du deuxième soudage continu, puis effectuer le deuxième soudage continu.

4. Procédé de soudage de la plaque de couvercle de batterie selon la revendication 1 ou 2, dans lequel, au cours de chaque soudage, la puissance de soudage augmente jusqu'à atteindre la puissance nominale lorsque le faisceau de soudage commence à se déplacer depuis la position initiale (A1, B1), une partie du cordon de soudure correspondant au déplacement du faisceau de soudage pendant l'augmentation de la puissance de soudage formant une zone de soudage à faible puissance (L1, L2) ; au cours de chaque soudage, le faisceau de soudage est décéléré à partir de la puissance nominale avant de se déplacer vers la position finale (A2, B2), et une partie du cordon de soudure correspondant au déplacement du faisceau de soudage lorsque la puissance de soudage diminue forme une zone de soudage à faible puissance (L1, L2).

5. Procédé de soudage de la plaque de couvercle de batterie selon la revendication 4, dans lequel la zone de soudage à faible puissance formée lorsque le deuxième soudage continu commence chevauche la zone de soudage à faible puissance formée lorsque le premier soudage continu se termine, et la zone de soudage à faible puissance formée lorsque le deuxième soudage continu se termine chevauche la zone de soudage à faible puissance formée lorsque le premier soudage continu commence, ou
la zone de soudage à faible puissance formée lorsque le deuxième soudage continu commence chevauche la zone de soudage à faible puissance formée lorsque le premier soudage continu commence, et la zone de soudage à faible puissance formée lorsque le deuxième soudage continu se termine chevauche la zone de soudage à faible puissance formée lorsque le premier soudage continu se termine.

6. Procédé de soudage de la plaque de couvercle de batterie selon la revendication 5, dans lequel la longueur de la zone de soudage à faible puissance (L1, L2) formée lorsque la puissance de soudage augmente est égale à la longueur de la zone de soudage à faible puissance (L1, L2) formée lorsque la puissance de soudage diminue.
